# FASCICULE DE BREVET EUROPEEN

(11) **EP 1 965 164 B1**
(45) Date de publication et mention de la délivrance du brevet: **21.04.2010**
(21) Numéro de dépôt: 08356030.0
(22) Date de dépôt: 25.02.2008
(51) Int. Cl.: F28D 7/14, F24D 3/08

(54) **Dispositif d'échange de chaleur entre des fluides appartenant à deux circuits**
Vorrichtung zum Wärmeaustausch zwischen Flüssigkeiten, die zwei verschiedenen Kreisläufen angehören
Device for heat exchange between fluids belonging to two circuits

(30) Priorité: 28.02.2007 FR 0701444
(43) Date de publication de la demande: 03.09.2008
(73) Titulaire: Atlantic Climatisation et Ventilation, 69330 Meyzieu (FR)
(72) Inventeur: Saisset, Luc, 38460 Villemoirieu (FR); Chapelle, Jean-Paul, 01190 Saint Etienne sur Reyssouze (FR); Meljac, Laure, 74230 Thones (FR)
(74) Mandataire: Maureau, Philippe

(56) Documents cités:
- EP-A- 0 663 569
- EP-A- 0 870 993
- EP-A- 1 103 775
- AT-B- 368 271
- DE-A1-102005 019 856

## Description

L'invention concerne un dispositif d'échange de chaleur entre des fluides appartenant à deux circuits.

Ces dispositifs comportent généralement un premier circuit dans lequel circule un fluide caloporteur destiné à alimenter des émetteurs et un second circuit dans lequel circule un fluide frigorigène soumis à des changements d'état.

Les émetteurs peuvent être notamment des planchers chauffants, des radiateurs basses températures ou des ventilo-convecteurs.

Ces dispositifs sont notamment destinés à équiper des installations de chauffage, éventuellement réversibles, de type pompe à chaleur en formant des condenseurs, ou des évaporateurs.

L'art fait état de quatre catégories de condenseurs équipant les pompes à chaleur dans lesquelles le fluide frigorigène échange de la chaleur avec de l'eau ou avec de l'eau associée à un anti-gel.

La première catégorie est constituée des condenseurs à serpentin. Dans ces dispositifs, un serpentin enroulé en spirale est logé dans réservoir. Les condenseurs à serpentin sont classés en deux sous ensembles selon que le fluide frigorigène circule dans le réservoir ou à l'intérieur du serpentin.

La deuxième catégorie concerne les condenseurs à plaques brasées. Ces condenseurs se composent de plusieurs plaques en acier inoxydable. Les plaques forment des espaces séparés les uns des autres, dans lesquels s'écoulent séparément le fluide frigorigène destiné à se condenser et l'eau à chauffer, associée ou non à un anti-gel. Les plaques sont conductrices et favorisent l'échange de chaleur.

La troisième catégorie est composée des condenseurs multitubulaires. Un grand nombre de tubes sont placés à l'intérieur d'une virole. Dans ces tubes circule l'eau à chauffer, associée ou non à un anti-gel. La condensation du fluide frigorigène s'effectue dans la virole, sur la surface extérieure des tubes à eau. A chaque extrémité de la virole se trouvent des boîtes à eau qui distribuent l'eau en série et en parallèle dans les divers tubes.

Enfin, la quatrième catégorie concerne les condenseurs à tubes coaxiaux, également appelés plus succinctement condenseurs coaxiaux. Ils se composent de deux tubes coaxiaux, respectivement un tube interne et un tube externe, enroulés ensemble en spirale. Dans le tube interne circule l'eau, associée ou non à un anti-gel, le fluide frigorigène circulant dans le tube externe. La paroi du tube interne peut être équipée d'ailettes, côté fluide frigorigène, pour favoriser l'échange thermique avec l'eau à chauffer.

Ces quatre catégories de condenseurs peuvent également jouer le rôle d'évaporateur lorsque les pompes à chaleur qu'ils équipent sont utilisées en mode rafraîchissement.

Quel que soit le condenseur, l'eau de chauffage associée ou non à un anti-gel est confinée dans des tubes tout au long du circuit de chauffage. Il se produit alors un phénomène d'embouage difficile à résoudre puisque le nettoyage des condenseurs précités n'est généralement pas aisé.

En ce qui concerne les échangeurs à plaques, les pertes de charge côté eau sont importantes et nécessitent la présence de pompes de circulation puissances. La résistance au gel est en outre très faible.

Dans le cas des échangeurs à plaques ou des échangeurs coaxiaux, le fluide frigorigène transfère efficacement son énergie de condensation, de désurchauffe et de sous-refroidissement, à l'eau ou à l'eau associée à l'anti-gel. Néanmoins, les volumes d'eau contenus dans ce type d'échangeurs sont faibles. Par conséquent, les condenseurs à plaques ou coaxiaux ont très peu d'inertie thermique, ce qui peut s'avérer problématique, en particulier lors des cycles de dégivrage.

Enfin, dans le cas des condenseurs coaxiaux, la surface d'échange entre le fluide frigorigène et l'eau, associée ou non à un anti-gel, se limite à la surface de la paroi du tube interne, ce qui réduit le rendement du dispositif.

L'invention vise à remédier à ces inconvénients en proposant un dispositif d'échange de chaleur réduisant les phénomènes d'embouage, résistant au gel, adapté aux cycles de dégivrage, et ayant un rendement élevé.

A cet effet, l'invention concerne une installation selon la revendication 1.

Les échanges de chaleurs se produisent alors, non plus uniquement au niveau de la paroi du tube interne de l'échangeur coaxial, mais également par l'intermédiaire de la paroi du tube externe de celui-ci. Le rendement est donc fortement amélioré.

En outre, l'eau circulant dans l'échangeur coaxial n'est plus confiné dans des tubes mais débouche dans un réservoir facile à nettoyer, ce qui permet d'éviter les phénomènes d'embouage.

Ce réservoir constitue également une zone tampon présentant un volume d'eau important et, par conséquent, une inertie accrue permettant notamment de s'adapter aux cycles de dégivrage.

Avantageusement, le tube interne débouche au niveau d'une zone médiane du réservoir.

Préférentiellement, le dispositif d'échange de chaleur comporte
une première et une seconde entrées de fluide caloporteur, disposées respectivement en partie basse et en partie médiane du réservoir, une première et une seconde sorties de fluide caloporteur, disposées respectivement en partie médiane et en partie haute du réservoir,
un premier et un second échangeurs à tubes coaxiaux, disposés à l'intérieur du réservoir et destinés à être immergés dans le fluide caloporteur, présentant chacun un tube interne et un tube externe,
le tube interne du premier échangeur à tubes coaxiaux étant raccordé, à une extrémité, à la première entrée de fluide caloporteur et débouchant, à l'autre extrémité, dans la zone médiane du réservoir,
le tube interne du second échangeur à tubes coaxiaux étant raccordé, à une extrémité, à la seconde entrée de fluide caloporteur et débouchant, à l'autre extrémité, dans la zone supérieure du réservoir,
le tube externe du premier échangeur étant raccordé, au niveau de son extrémité supérieure, à l'extrémité inférieure du tube externe du second échangeur, de manière à définir un tube unique de circulation destiné au passage du fluide frigorigène.

Le dispositif de chaleur peut ainsi être raccordé à deux émetteurs distincts, chaque émetteur étant raccordé à un échangeur à tubes coaxiaux.

Plus particulièrement, les deuxièmes entrée et sortie, disposées en partie supérieure du réservoir, sont destinées à être raccordées à un émetteur fonctionnant avec de l'eau à haute température.

Les premières entrée et sortie, disposée en partie inférieure du réservoir, sont destinées à être raccordées à un émetteur fonctionnant avec de l'eau à température moins élevée.

On peut ainsi par exemple produire de l'eau chaude sanitaire, nécessitant une température importante, tout en raccordant un réseau de chauffage, fonctionnant avec une température plus faible.

Il est à noter que les échangeurs actuels assurant la production de l'eau chaude sanitaire ne permettent pas le chauffage simultané de l'habitation et de l'eau chaude sanitaire.

Selon une variante de réalisation de l'invention, le dispositif d'échange de chaleur comporte
une première et une seconde entrées de fluide, disposées respectivement en partie basse et en partie médiane du réservoir, une première et une seconde sorties de fluide, disposées respectivement en partie médiane et en partie haute du réservoir,
le tube interne de l'échangeur à tubes coaxiaux étant raccordé, à une extrémité, à la première entrée de fluide caloporteur et débouchant, à l'autre extrémité, dans la zone médiane du réservoir,
un serpentin comportant une extrémité raccordée au tube externe de l'échangeur à tubes coaxiaux de manière à définir un tube unique de circulation destiné à être raccordé à un circuit de fluide frigorigène.

Selon une caractéristique de l'invention, l'extrémité débouchante de chaque tube interne est équipée d'un brise-jet.

Les brise-jets permettent de limiter l'agitation et de conserver ainsi la stratification naturelle des couches de température du fluide caloporteur contenu dans le réservoir. Le fluide chaud est ainsi recueilli en partie haute du réservoir alors que le fluide de température plus faible est recueilli en partie médiane.

Préférentiellement, le réservoir comporte au moins une résistance électrique constituant un chauffage d'appoint.

Avantageusement, la résistance est positionnée au-dessus de l'échangeur à tubes coaxiaux raccordé en partie basse du réservoir

Cette caractéristique vise à privilégier le chauffage du fluide caloporteur en partie haute du réservoir.

Dans ce cas, il sera possible d'abaisser la température du fluide dans la seule partie basse du réservoir tout en maintenant le fluide caloporteur contenu en partie haute à une température suffisante.

Ceci apporte un avantage évident dans le cas où le dispositif peut être raccordé à deux émetteurs, respectivement en partie basse et en partie haute du réservoir, dont les températures doivent pouvoir être ajustées indépendamment l'une de l'autre.

Selon une caractéristique de l'invention, le dispositif comporte au moins une vessie d'expansion disposée à l'intérieur du réservoir.

La vessie d'expansion permet de maintenir en pression le fluide caloporteur contenu dans le réservoir.

Elle permet en outre de compenser les phénomènes de dilatations de fluide caloporteur.

Cette vessie favorise la résistance au gel du réservoir et des éléments qui le composent, notamment en cas d'arrêt du dispositif, lorsque par exemple le réservoir est disposé à l'extérieur d'un bâtiment.

Avantageusement, l'installation comporte un dispositif dans lequel les secondes entrée et sortie de fluide sont raccordées à un préparateur d'eau chaude sanitaire.

Les secondes entrée et sortie de fluide forment la partie haute du réservoir et permettent, par conséquent, d'alimenter le préparateur d'eau chaude sanitaire avec de l'eau à haute température.

Avantageusement, au moins une entrée et au moins une sortie de fluide caloporteur sont raccordées à un réseau de chauffage.

Préférentiellement, l'installation comporte
une boucle de circulation reliant la sortie supérieure et l'entrée inférieure de fluide caloporteur, équipée de moyens de circulation du fluide caloporteur, par exemple une pompe,
une entrée et une sortie additionnelles, disposées respectivement en partie basse et en partie haute du réservoir, reliées à un émetteur.

L'adjonction d'une boucle de circulation permet de favoriser les échanges thermiques entre le fluide caloporteur et le fluide frigorigène puisque l'eau prélevée en partie supérieure est réintroduite dans l'échangeur à tube coaxial.

Selon une caractéristique de l'invention, l'installation comporte une première conduite raccordée à l'extrémité supérieure du tube externe du second échangeur à tubes coaxiaux ou à l'extrémité supérieure du serpentin, et une seconde conduite raccordée à l'extrémité inférieure de celui-ci, les première et seconde conduites étant raccordées l'une à l'autre en un point de raccordement et comportant respectivement un premier et un second moyen d'interruption de l'écoulement, par exemple un clapet anti-retour ou une vanne d'isolement.

Cette caractéristique de l'invention concerne plus spécifiquement les formes de réalisation dans lesquelles le dispositif d'échange de chaleur comporte un échangeur inférieur, à savoir un échangeur à tubes coaxiaux, et un échangeur supérieur, à savoir un échangeur à tubes coaxiaux ou un serpentin.

Cette caractéristique permet de pouvoir court-circuiter l'échangeur supérieur en fonction du sens de circulation du fluide frigorigène.

Avantageusement, le premier moyen d'interruption de l'écoulement est un clapet anti-retour apte à empêcher la circulation du fluide frigorigène du second échangeur à tubes coaxiaux ou du serpentin vers le point de raccordement, le second moyen d'interruption de l'écoulement étant un clapet anti-retour apte à empêcher la circulation du fluide frigorigène du point de raccordement vers le premier échangeur à tubes coaxiaux.

Selon une caractéristique de l'invention, l'installation comporte une troisième conduite raccordée à l'extrémité supérieure du tube externe du premier échangeur coaxial et une quatrième conduite raccordé à l'extrémité inférieure de celui-ci, les troisième et quatrième conduites étant raccordées l'une à l'autre en un point de raccordement et comportant respectivement un troisième et un quatrième moyen d'interruption de l'écoulement, par exemple une vanne d'isolement.

De toute façon l'invention sera bien comprise à l'aide de la description qui suit en référence aux dessins schématiques annexés représentant, à titre d'exemples non limitatifs, plusieurs forme de réalisation de ce dispositif d'échange de chaleur.

Figure 1 représente une première forme de réalisation du dispositif d'échange de chaleur et de l'installation selon l'invention.
Figures 2 à 7 sont des vues correspondant à la figure 1, représentant chacune une forme de réalisation différente de l'invention.

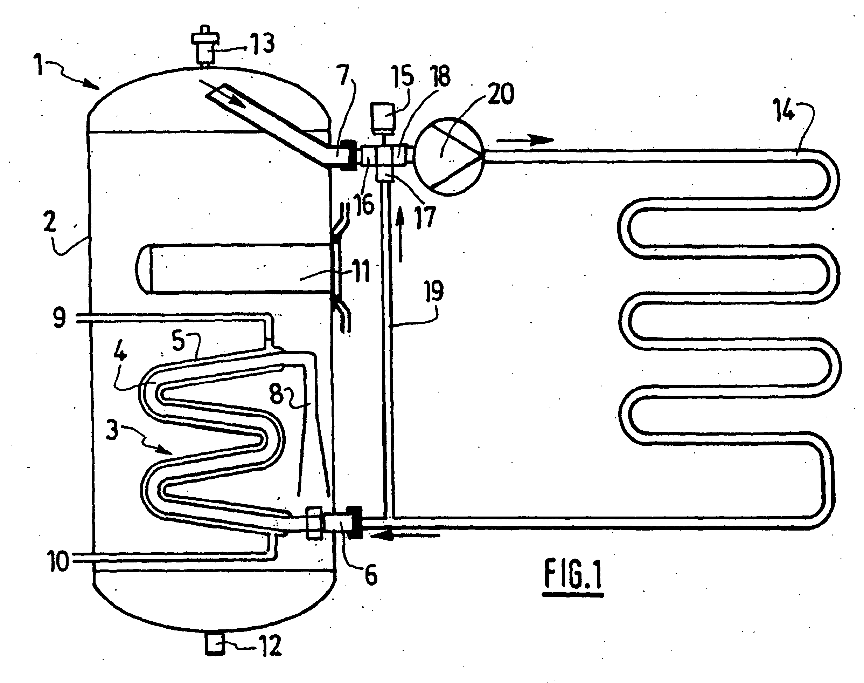

La figure 1 décrit une installation selon l'invention comprenant un dispositif d'échange de chaleur 1 entre des fluides appartenant à deux circuits, respectivement un premier circuit dans lequel circule un fluide caloporteur destiné à alimenter des émetteurs et un second circuit dans lequel circule un fluide frigorigène soumis à des changements d'état.

Le fluide caloporteur est préférentiellement de l'eau, associée ou non à un anti-gel.

Le dispositif d'échange de chaleur comporte un réservoir 2 de contenance comprise entre 30 et 50 litres, à l'intérieur duquel est disposé un échangeur 3 à tubes coaxiaux comprenant un tube interne 4 et un tube externe 5.

Le réservoir est équipé d'une entrée 6 de fluide caloporteur disposée en partie basse du réservoir 2 et d'une sortie 7 de fluide caloporteur disposée en partie haute.

L'échangeur à tubes coaxiaux 3 présente la forme d'une hélice, les tubes 4, 5 étant de forme sensiblement cylindrique.

Les tubes interne 4 et externe 5 comportent des diamètres externes compris respectivement entre 12 et 28 mm, et entre 25 et 54 mm.

Comme détaillé ci-après, le tube interne 4 est destiné au passage du fluide caloporteur, le tube externe 5 étant destiné au passage du fluide frigorigène.

Le tube interne 4 est raccordé à l'entrée de fluide caloporteur 6 au niveau de son extrémité inférieure et débouche dans le réservoir 2 au niveau de son extrémité supérieure, cette dernière étant équipée d'un brise-jet 8 tourné vers le bas.

Le tube externe 5 est raccordé à une entrée 9 de gaz frigorigène au niveau de son extrémité supérieure et à une sortie 10 de gaz frigorigène au niveau de son extrémité inférieure.

Les entrée 9 et sortie 10 de gaz frigorigène sont disposées respectivement en partie médiane et en partie basse du réservoir 2 et sont elles-mêmes raccordées à un circuit classique de circulation de gaz frigorigène, comportant notamment un compresseur et un organe de détente (non représentés).

En ce qui concerne les termes entrée et sortie de gaz frigorigène, ceux-ci sont utilisés à des fins de compréhension et font référence au cas où le dispositif d'échange de chaleur 1 fonctionne en mode condensateur. Bien entendu, en fonctionnement réversible, c'est-à-dire en mode évaporateur, les termes précités ne doivent pas être entendu comme une indication du sens de circulation du fluide frigorigène.

Le réservoir 2 comporte en outre une résistance électrique 11 constituant un chauffage d'appoint, disposé au-dessus de l'échangeur coaxial 3. Cette résistance 11 permet de pallier aux insuffisances du dispositif lorsque les besoins en chauffage deviennent trop importants.

Le réservoir 2 comporte de plus un robinet de vidange 12 disposé en partie basse et une vanne de purge d'air 13, disposée en partie haute.

Les entrée 6 et sortie 7 de fluide caloporteur sont reliées à un réseau de chauffage 14 régulé par une vanne trois voies 15. Celle-ci comporte, de manière classique, deux entrées 16, 17 et une sortie 18.

Une entrée 16 de la vanne trois voies 15 est raccordée à la sortie 7 de fluide caloporteur, l'autre entrée 17 étant raccordée à l'entrée 6 de fluide caloporteur par l'intermédiaire d'une dérivation 19. La sortie 18 de la vanne trois voies 15 est raccordée à une extrémité du circuit de chauffage 14 par l'intermédiaire d'une pompe à aspiration ou à refoulement 20.

Le fonctionnement de cette première forme de réalisation de l'installation est décrit ci-après.

Afin de détailler le fonctionnement de l'installation, il est nécessaire de différencier deux modes, à savoir le mode dit « chaud », dans lequel le réseau de chauffage 14 sera par exemple utilisé afin de chauffer une habitation, et le mode dit « froid », dans lequel le réseau de chauffage 14 sera utilisé afin de climatiser l'habitation. De manière générale, quelle que soit la forme de réalisation de l'installation selon l'invention, celle-ci est réversible et peut fonctionner aussi bien en mode chaud qu'en mode froid.

En mode chaud, le gaz frigorigène circule dans le tube externe 5 de l'échangeur coaxial 3, de l'extrémité supérieur de l'échangeur coaxial vers son extrémité inférieure.

Le fluide caloporteur circule dans le tube interne 4 de l'échangeur coaxial 3, à contre courant par rapport au sens de circulation du fluide frigorigène, c'est-à-dire depuis l'extrémité inférieure de l'échangeur coaxial 3 vers l'extrémité supérieure de celui-ci. Le fluide frigorigène échange de la chaleur avec le fluide caloporteur par l'intermédiaire de la paroi du tube interne 4.

Le fluide caloporteur s'écoule ensuite par l'extrémité supérieure débouchante du tube interne 4, par l'intermédiaire du brise-jet 8, et alimente le réservoir 2.

Le liquide caloporteur contenu dans le réservoir 2 échange alors à nouveau de la chaleur avec le fluide frigorigène, par l'intermédiaire de la paroi du tube externe 5.

Le fluide caloporteur chaud remonte ensuite en direction de l'extrémité supérieure du réservoir 2, du fait des différences de masse volumique entre le fluide caloporteur chaud et le fluide caloporteur plus froid.

Le fluide caloporteur chaud est ensuite soutirée du réservoir par la sortie 7 de fluide caloporteur afin d'alimenter le circuit de chauffage 14.

La température de chauffage est modifiée en régulant la proportion de fluide chaud provenant de la sortie du réservoir 7 et celle de fluide froid, provenant de la dérivation 19.

En mode froid, le sens de circulation du fluide frigorigène est inversé, le fluide frigorigène et le fluide caloporteur étant alors co-courants.

Il ressort de la description qui précède que le dispositif d'échange de chaleur selon l'invention optimise le transfert de chaleur entre le fluide frigorigène et le fluide caloporteur en exploitant non seulement la surface de la paroi séparant les deux fluides dans l'échangeur coaxial 3 mais également la surface externe de ce dernier.

Par ailleurs, ce dispositif possède, du fait du volume important de fluide caloporteur contenu dans le réservoir 2, une inertie thermique qui évite en particulier un refroidissement important de l'eau de chauffage lors des cycles de dégivrage.

De plus, ce dispositif permet de décanter les éventuelles boues contenues dans les réseaux de chauffage et limite l'obstruction de l'échangeur coaxial 3.

Enfin, l'eau dans le réservoir 2 ayant très peu de vitesse, la purge de l'air éventuellement contenu dans le circuit est favorisée.

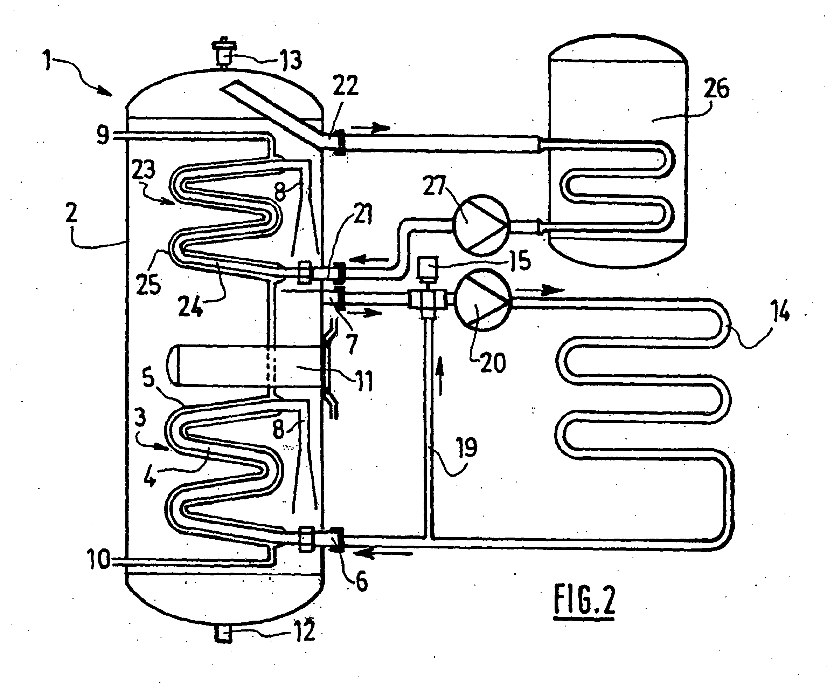

La figure 2 représente une seconde forme de réalisation de l'invention. Certaines caractéristiques étant communes aux différents modes de réalisation, les mêmes éléments sont désignés par les mêmes références.

Dans cette forme de réalisation, le réservoir comporte
- une première 6 et une seconde 21 entrées de fluide caloporteur, disposées respectivement en partie basse et en partie médiane du réservoir 2,
- une première 7 et une seconde 22 sorties de fluide caloporteur, disposées respectivement en partie médiane et en partie haute du réservoir 2,
- un premier 3 et un second 23 échangeurs à tubes coaxiaux, disposés à l'intérieur du réservoir 2 et destinés à être immergés dans le fluide caloporteur, présentant chacun un tube interne 4, 24 et un tube externe 5, 25.

Le tube interne 4 du premier échangeur 3 à tubes coaxiaux est raccordé, à une extrémité, à la première entrée 6 de fluide caloporteur et débouche, à l'autre extrémité, dans la zone médiane du réservoir 2.

Le tube interne 24 du second échangeur 23 à tubes coaxiaux est raccordé, à une extrémité, à la seconde entrée 21 de fluide caloporteur et débouche, à l'autre extrémité, dans la zone supérieure du réservoir 2.

Le tube externe 5 du premier échangeur 3 est raccordé, au niveau de son extrémité supérieure, à l'extrémité inférieure du tube externe 25 du second échangeur 23, de manière à définir un tube unique de circulation destiné au passage du fluide frigorigène.

Les entrée 9 et sortie 10 de gaz frigorigène sont disposées respectivement en partie haute et en partie basse du réservoir 2 et sont raccordées respectivement à l'extrémité supérieure du tube externe 25 du second échangeur coaxial 23 et à l'extrémité inférieure du tube externe 5 du premier échangeur coaxial 3.

Les premières entrée 6 et sortie 7 de fluide caloporteur sont raccordées à un réseau de chauffage 14 similaire à celui décrit dans la première forme de réalisation.

Les secondes entrée 21 et sortie 22 de fluide caloporteur sont raccordées à un préparateur d'eau chaude sanitaire 26 par l'intermédiaire d'une pompe 27.

Le fluide frigorigène alimente ainsi successivement le tube externe 25 du second échangeur coaxial 23 puis le tube externe 5 du premier échangeur coaxial 3.

Cette seconde forme de réalisation permet de produire efficacement de l'eau chaude sanitaire dans la partie la plus chaude du réservoir 2, c'est-à-dire dans la partie supérieure, tout en alimentant également le circuit de chauffage 14.

En période hivernale, cette forme de réalisation assure une production d'eau chaude sanitaire à 50°C, même lorsque la température extérieure atteint -22°C, sans pour autant nécessiter l'arrêt de la circulation de l'eau du circuit de chauffage.

En période estivale, le dispositif permet à l'eau du circuit supérieur de récupérer la chaleur sensible de désurchauffe du fluide frigorigène. Ainsi, lorsque la température extérieure est supérieure à 13°C, la température de l'eau située en partie supérieure du réservoir atteint 80°C. Donc, en période estivale, la production d'eau chaude sanitaire peut être rapide et ne nécessite pas un fonctionnement en continu du compresseur du circuit de fluide frigorigène.

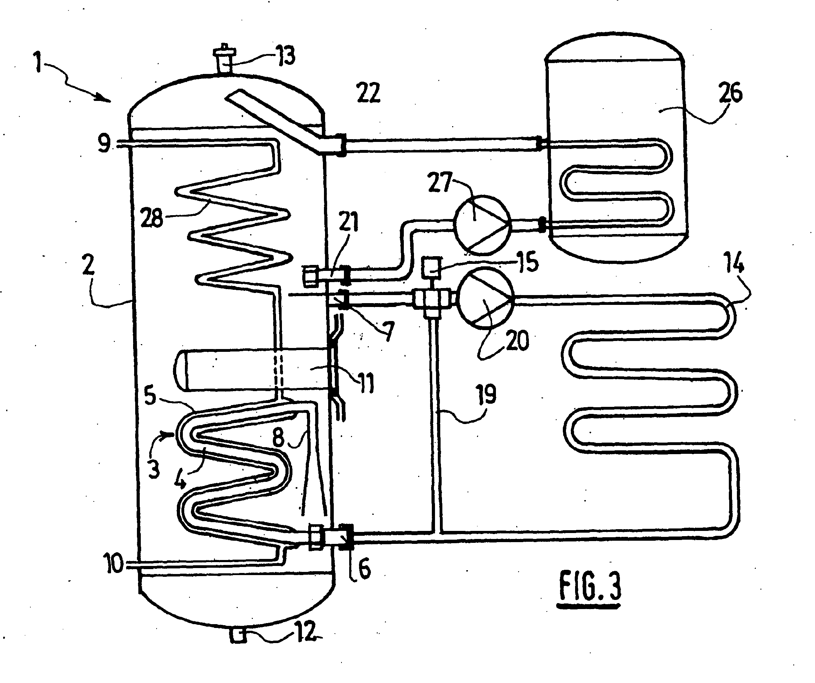

La figure 3 représente une troisième forme de réalisation dans laquelle le second échangeur coaxial 23 est remplacé par un serpentin 28.

Dans cette configuration, les secondes entrée 21 et sortie 22 de fluide caloporteur sont toutes deux reliées directement au volume interne du réservoir 2, l'eau en partie haute du réservoir 2 échangeant directement la chaleur avec la paroi du serpentin 28.

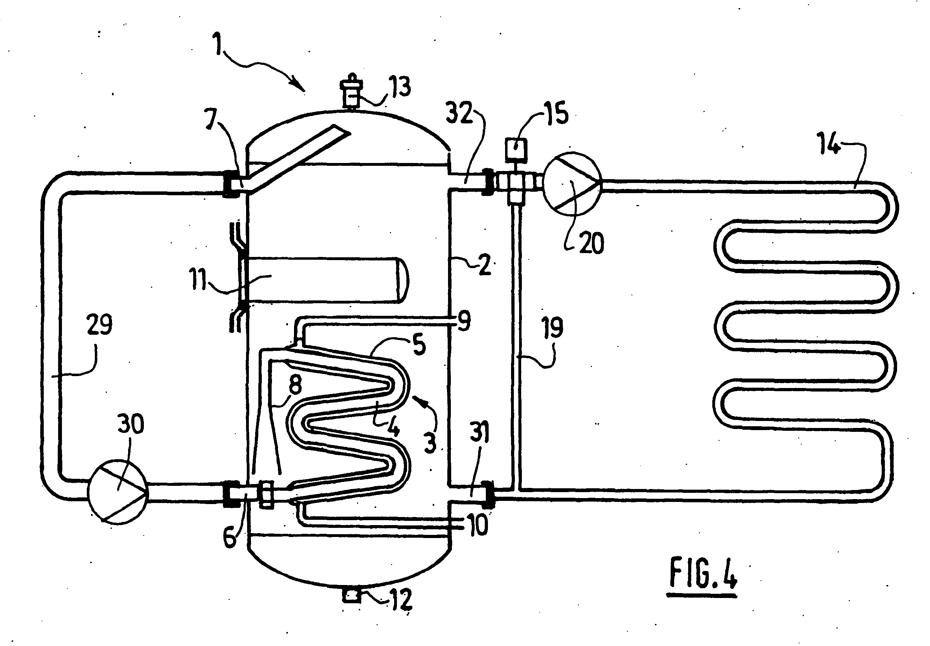

La figure 4 représente une quatrième forme de réalisation de l'invention dans laquelle l'installation comporte :
- une boucle de circulation 29 reliant la sortie supérieure 7 et l'entrée inférieure 6 de fluide caloporteur, équipée d'une pompe 30 à aspiration ou à refoulement,
- une entrée 31 et une sortie 32 additionnelles, disposées respectivement en partie basse et en partie haute du réservoir 2 et reliées au réseau de chauffage 14.

Dans cette forme de réalisation, l'entrée 31 et la sortie 32 additionnelle communiquent directement avec le volume interne du réservoir 2.

Une partie de l'eau est prélevée dans la zone supérieure du réservoir 2 et réintroduite dans le tube interne 4 de l'échangeur coaxial 3 disposé en partie basse.

Bien que la boucle de circulation 29 soit présentée dans le cadre d'une forme de réalisation comprenant un seul échangeur coaxial 3, une telle boucle de circulation peut également être adaptée aux autres formes de réalisation de l'invention.

La présence d'une boucle de circulation 29 permet de favoriser les échanges thermiques entre le fluide frigorigène et l'eau de chauffage, en particulier lorsque le débit de retour d'eau dans l'échangeur coaxial 3 est faible.

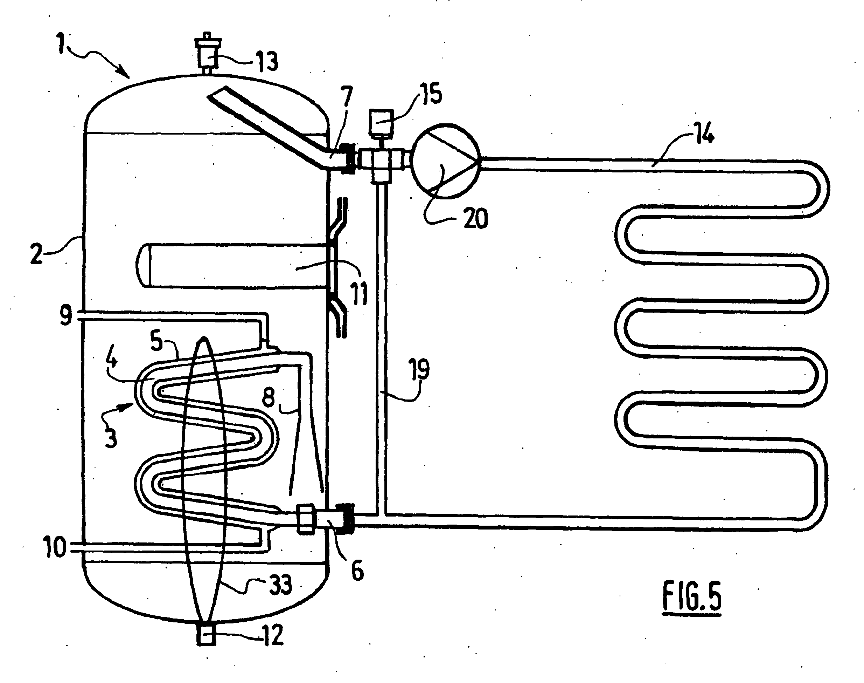

Dans une forme de réalisation représentée en figure 5, le dispositif d'échange de chaleur 1 comporte une vessie d'expansion 33 fixée à l'extrémité inférieure du réservoir 2 et insérée dans l'espace délimité par les spires du ou des échangeurs coaxiaux 3. La vessie 33 est compartimentée par une membrane étanche et déformable. L'un des compartiments contient de l'azote sous 1,5 bars de pression, le deuxième compartiment communique avec l'eau du réservoir.

La vessie d'expansion 33 remplace efficacement le vase d'expansion utilisé de manière classique, permettant ainsi un gain de place au niveau de l'installation globale. Par ailleurs, la vessie d'expansion favorise la résistance au gel du dispositif.

En outre, quelle que soit la forme de réalisation de l'invention, la température de l'eau dans le réservoir 2 peut être ajustée en fonction des besoins c'est-à-dire de la température d'eau requise par les différents émetteurs 14, 26.

Dans le cas où le dispositif d'échange de chaleur comporte deux échangeurs immergés 3, 23, la mesure de la température de l'eau contenue dans le réservoir 2 est réalisée en partie basse de celui-ci afin de ne pas pénaliser la production d'eau chaude sanitaire.

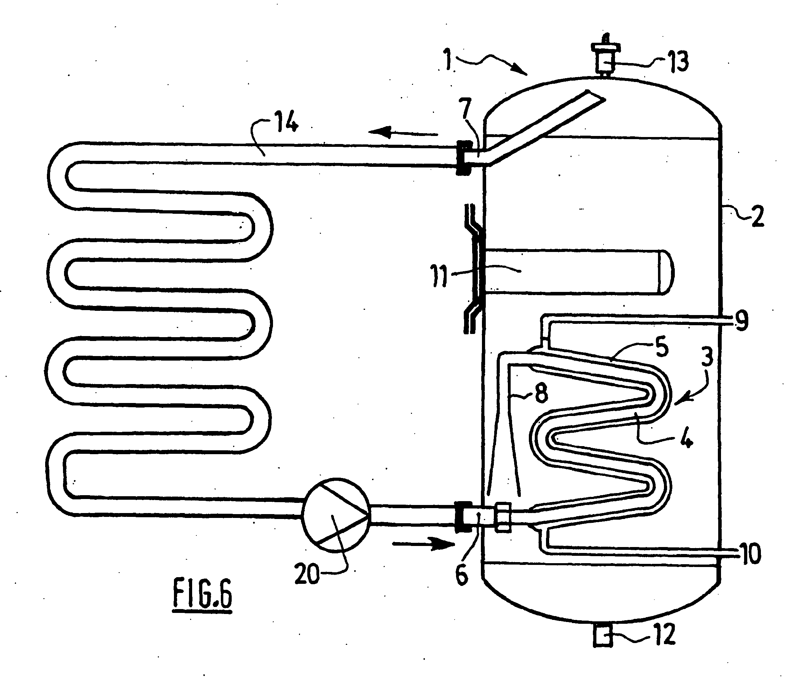

En outre, dans le cas où la température de l'eau dans le réservoir 2 est ajustée aux besoins, la vanne trois voies 15 du circuit de chauffage peut être supprimée, ce qui permet un gain en terme de consommation électrique. Une telle forme de réalisation est représentée en figure 6.

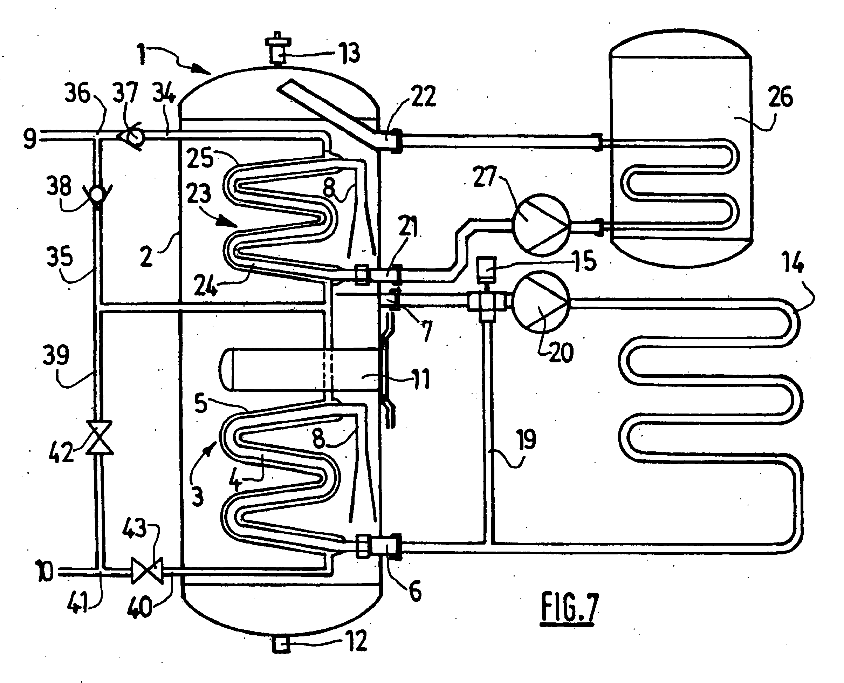

La figure 7 représente une forme de réalisation dans laquelle l'installation comporte une première conduite 34 raccordée à l'extrémité supérieure du tube externe 25 du second échangeur 23 à tubes coaxiaux et une seconde conduite 35 raccordée à l'extrémité inférieure de celui-ci.

Les première 34 et seconde 35 conduites sont raccordées l'une à l'autre en un point de raccordement 36 et comportent respectivement un premier 37 et un second 38 clapets anti-retour.

Le premier clapet anti-retour 37 est disposé de sorte qu'il empêche la circulation du fluide frigorigène du second échangeur coaxial 23 vers le point de raccordement 36.

Le second clapet anti-retour 38 est disposé de sorte qu'il empêche la circulation du fluide frigorigène du point de raccordement 36 vers le premier échangeur coaxial 3.

L'installation comporte en outre une troisième conduite 39 raccordée à l'extrémité supérieure du tube externe 5 du premier échangeur coaxial 3 et une quatrième conduite 40 raccordée à l'extrémité inférieure de celui-ci, les troisième 39 et quatrième 40 conduites étant raccordées l'une à l'autre en un point de raccordement 41.

Les troisième 39 et quatrième 40 conduites comportent respectivement une première 42 et une seconde 43 vannes d'isolement.

Le fonctionnement de cette forme de réalisation va maintenant être décrit plus en détail.

Pour cela, on distinguera quatre modes de fonctionnement, respectivement :
- un premier mode de chauffage et de production d'eau chaude sanitaire,
- un second mode de dégivrage,
- un troisième mode de rafraîchissement sans production d'eau chaude sanitaire,
- un quatrième mode de rafraîchissement avec production d'eau chaude sanitaire.

En mode de chauffage et de production d'eau chaude sanitaire, la vanne 42 est fermée et la vanne 43 est ouverte.

Le fluide frigorigène entre au niveau du point de raccordement 36 des première 34 et seconde 35 conduites, circule successivement dans la première conduite 34, dans le second échangeur coaxial 23, dans le premier échangeur coaxial 3 puis dans la quatrième conduite 40 pour sortir au niveau du point de raccordement 41 des troisième 39 et quatrième 40 conduites.

Le clapet 38 et la vanne 42 empêchent le passage du fluide frigorigène dans les seconde 35 et troisième 39 conduites.

En mode de dégivrage et en mode de rafraîchissement sans production d'eau chaude sanitaire, la vanne 42 est fermée et la vanne 43 est ouverte.

Le fluide frigorigène entre au niveau du point de raccordement 41 des troisième 39 et quatrième 40 conduites, circule successivement dans la quatrième conduite 40, dans le premier échangeur coaxial 3, dans la seconde conduite 35 puis sort au niveau du point de raccordement 36 des première 34 et seconde 35 conduites.

La présence du clapet 37 empêche le fluide frigorigène de circuler dans le second échangeur coaxial 23. De même, la vanne d'isolement 42 empêche le fluide de circuler dans la troisième conduite 39.

En mode de rafraîchissement avec production d'eau chaude sanitaire, la vanne 42 est ouverte et la vanne 43 est fermée.

Le fluide frigorigène entre au niveau du point de raccordement 36 des première 34 et seconde 35 conduites, circule successivement dans la première conduite 34, dans le second échangeur coaxial 23, dans la troisième conduite 39 puis sort au niveau du point de raccordement 41 des troisième 39 et quatrième 40 conduites.

Le clapet 38 empêche le fluide frigorigène de circuler dans la seconde conduite 35. De même, la vanne 43 empêche celui-ci de circuler dans le premier échangeur coaxial 3.

Il est à noter que, dans le mode de réalisation représenté en figure 7, les clapets anti-retour 37, 38 peuvent être remplacés par des vannes d'isolement commandées.

Comme il va de soi, l'invention ne se limite pas aux seules formes d'exécution de cette installation, décrites ci-dessus à titre d'exemple, mais elle embrasse au contraire toutes les variantes selon les revendications.

## Revendications

1. Installation comportant un dispositif d'échange de chaleur (1) un premier circuit dans lequel circule un fluide caloporteur alimentant des émetteurs (14, 26) et un second circuit, comportant un compresseur et un organe de détente, dans lequel circule un fluide frigorigène soumis à des changements d'état, le dispositif comportant un échangeur à tubes coaxiaux (3) comprenant un tube interne (4) et un tube externe (5), le fluide caloporteur circulant dans le tube interne (4), le fluide frigorigène circulant dans le tube externe (5),
**caractérisée en ce que** le dispositif comporte un réservoir (2), recevant le fluide caloporteur et équipé d'une entrée de fluide caloporteur (6) disposée en partie basse du réservoir (2) et d'une sortie de fluide caloporteur (7) disposée en partie haute,
l'échangeur à tubes coaxiaux (3) étant disposé à l'intérieur du réservoir (2) et étant immergé dans le fluide caloporteur, le tube interne (4) étant raccordé à l'entrée de fluide caloporteur (6) à une première extrémité et débouchant dans le réservoir (2) à une seconde extrémité..

2. Installation selon la revendication 1, **caractérisée en ce que** le tube interne (4) débouche au niveau d'une zone médiane du réservoir (2).

3. Installation selon l'une des revendications 1 et 2, **caractérisée en ce que** le dispositif comporte:
- une première (6) et une seconde (21) entrées de fluide caloporteur, disposées respectivement en partie basse et en partie médiane du réservoir (2), une première (7) et une seconde (22) sorties de fluide caloporteur, disposées respectivement en partie médiane et en partie haute du réservoir (2),
- un premier (3) et un second (23) échangeurs à tubes coaxiaux, disposés à l'intérieur du réservoir (2) et destinés à être immergés dans le fluide caloporteur, présentant chacun un tube interne (4, 24) et un tube externe (4, 25),
- le tube interne (4) du premier échangeur à tubes coaxiaux (3) étant raccordé, à une extrémité, à la première entrée de fluide caloporteur (6) et débouchant, à l'autre extrémité, dans la zone médiane du réservoir (2),
- le tube interne (24) du second échangeur à tubes coaxiaux (23) étant raccordé, à une extrémité, à la seconde entrée de fluide caloporteur (21) et débouchant, à l'autre extrémité, dans la zone supérieure du réservoir (2),
- le tube externe (5) du premier échangeur (3) étant raccordé, au niveau de son extrémité supérieure, à l'extrémité inférieure du tube externe (25) du second échangeur (23), de manière à définir un tube unique de circulation destiné au passage du fluide frigorigène.

4. Installation selon l'une des revendications 1 et 2, **caractérisée en ce que** le dispositif comporte :
- une première (6) et une seconde (21) entrées de fluide, disposées respectivement en partie basse et en partie médiane du réservoir (2), une première (7) et une seconde (22) sorties de fluide, disposées respectivement en partie médiane et en partie haute du réservoir (2),
- le tube interne (4) de l'échangeur à tubes coaxiaux (3) étant raccordé, à une extrémité, à la première entrée de fluide caloporteur (6) et débouchant, à l'autre extrémité, dans la zone médiane du réservoir (2),
- un serpentin (28) comportant une extrémité raccordée au tube externe (5) de l'échangeur à tubes coaxiaux (3) de manière à définir un tube unique de circulation destiné à être raccordé à un circuit de fluide frigorigène.

5. Installation selon l'une des revendications 1 à 4, **caractérisée en ce que** l'extrémité débouchante de chaque tube interne (4, 24) est équipée d'un brise-jet (8).

6. Installation selon l'une des revendications 1 à 5, **caractérisée en ce que** le réservoir (2) comporte au moins une résistance électrique (11) constituant un chauffage d'appoint.

7. Installation selon la revendication 6, **caractérisée en ce que** la résistance (11) est positionnée au-dessus de l'échangeur à tubes coaxiaux (3) raccordé en partie basse du réservoir (2).

8. Installation selon l'une des revendications 1 à 6, **caractérisé en ce qu'**il comporte au moins une vessie d'expansion (33) disposée à l'intérieur du réservoir (2).

9. Installation selon l'une des revendications 3 à 8, **caractérisée en ce que** les secondes entrée (21) et sortie (22) de fluide sont raccordées à un préparateur d'eau chaude sanitaire (26).

10. Installation selon l'une des revendications 1 à 8, **caractérisée en ce qu'**au moins une entrée (6) et au moins une sortie (7) de fluide caloporteur sont raccordées à un réseau de chauffage (14).

11. Installation selon l'une des revendications 1 et 2, **caractérisée en ce qu'**elle comporte :
- une boucle de circulation (29) reliant la sortie supérieure (7) et l'entrée inférieure (6) de fluide caloporteur, équipée de moyens de circulation du fluide caloporteur, par exemple d'une pompe (30),
- une entrée (31) et une sortie (32) additionnelles, disposées respectivement en partie basse et en partie haute du réservoir (2), reliées à un émetteur (14).

12. Installation selon l'une des revendications 10 et 11, en combinaison avec l'une des revendications 3 et 4, **caractérisée en ce qu'**elle comporte une première conduite (34) raccordée à l'extrémité supérieure du tube externe (25) du second échangeur à tubes coaxiaux (23) ou à l'extrémité supérieure du serpentin (28), et une seconde conduite (35) raccordée à l'extrémité inférieure de celui-ci, les première (34) et seconde (35) conduites étant raccordées l'une à l'autre en un point de raccordement (36) et comportant respectivement un premier (37) et un second (38) moyen d'interruption de l'écoulement, par exemple un clapet anti-retour ou une vanne d'isolement.

13. Installation selon la revendication 12, **caractérisée en ce que** le premier moyen d'interruption de l'écoulement est un clapet anti-retour (37) apte à empêcher la circulation du fluide frigorigène du second échangeur à tubes coaxiaux (23) ou du serpentin (28) vers le point de raccordement (36), le second moyen d'interruption de l'écoulement étant un clapet anti-retour (38) apte à empêcher la circulation du fluide frigorigène du point de raccordement (36) vers le premier échangeur à tubes coaxiaux (3).

14. Installation selon l'une des revendications 12 et 13, **caractérisé en ce qu'**elle comporte une troisième conduite (39) raccordée à l'extrémité supérieure du tube externe (5) du premier échangeur coaxial (3) et une quatrième conduite (40) raccordé à l'extrémité inférieure de celui-ci, les troisième (39) et quatrième (40) conduites étant raccordées l'une à l'autre en un point de raccordement (41) et comportant respectivement un troisième (42) et un quatrième (43) moyen d'interruption de l'écoulement, par exemple une vanne d'isolement

## Claims

1. Installation comprising a device for exchanging heat (1), a first circuit in which there circulates a heat-transfer fluid supplying emitters (14, 26) and a second circuit comprising a compressor and an expansion member, through which there circulates a refrigerant subject to changes in state, the device comprising a coaxial tubes exchanger (3) comprising an internal tube (4) and an external tube (5), the heat-transfer fluid circulating through the internal tube (4), the refrigerant circulating through the external tube (5),
**characterized in that** the device comprises a reservoir (2) receiving the heat-transfer fluid and equipped with a heat-transfer fluid inlet (6) located in the bottom part of the reservoir (2) and with a heat-transfer fluid outlet (7) located in the top part,
the coaxial tubes exchanger (3) being positioned inside the reservoir (2) and immersed in the heat-transfer fluid, the internal tube (4) being connected to the heat-transfer fluid inlet (6) at a first end and opening into the reservoir (2) at a second end.

2. Installation according to Claim 1, **characterized in that** the internal tube (4) opens in the region of a middle zone of the reservoir (2).

3. Installation according to one of Claims 1 and 2, **characterized in that** the device comprises:
- a first (6) and a second (21) inlet for heat-transfer fluid, these being located respectively at the bottom part and in the middle part of the reservoir (2), a first (7) and a second (22) outlet for heat-transfer fluid, these being located respectively in the middle part and in the top part of the reservoir (2),
- a first (3) and a second (23) coaxial tubes exchanger positioned inside the reservoir (2) and intended to be immersed in the heat-transfer fluid, each having an internal tube (4, 24) and an external tube (5, 25),
- the internal tube (4) of the first coaxial tubes exchanger (3) being connected, at one end, to the first heat-transfer fluid inlet (6) and opening, at the other end, into the middle zone of the reservoir (2),
- the internal tube (24) of the second coaxial tubes exchanger (23) being connected, at one end, to the second heat-transfer fluid inlet (21) and opening, at the other end, into the upper zone of the reservoir (2),
- the external tube (5) of the first exchanger (3) being connected, at its upper end, to the lower end of the external tube (25) of the second exchanger (23) so as to define a single circulation tube through which the refrigerant passes.

4. Installation according to one of Claims 1 and 2, **characterized in that** the device comprises:
- a first (6) and a second (21) inlet for fluid, these being located respectively at the bottom part and in the middle part of the reservoir (2), a first (7) and a second (22) outlet for fluid, these being located respectively in the middle part and in the top part of the reservoir (2),
- the internal tube (4) of the coaxial tubes exchanger (3) being connected, at one end, to the first heat-transfer fluid inlet (6) and opening, at the other end, into the middle zone of the reservoir (2),
- a coil (28) comprising one end connected to the external tube (5) of the coaxial tubes exchanger (3) so as to define a single circulation tube intended to be connected to a refrigerant circuit.

5. Installation according to one of Claims 1 to 4, **characterized in that** the open end of each internal tube (4, 24) is fitted with an anti-splash device (8).

6. Installation according to one of Claims 1 to 5, **characterized in that** the reservoir (2) comprises at least one electrical resistive element (11) providing top-up heating.

7. Installation according to Claim 6, **characterized in that** the resistive element (11) is positioned above the coaxial tubes exchanger (3) connected in the bottom part of the reservoir (2).

8. Installation according to one of Claims 1 to 6, **characterized in that** it comprises at least one expansion vessel (33) positioned inside the reservoir (2).

9. Installation according to one of Claims 3 to 8, **characterized in that** the second fluid inlet (21) and outlet (22) are connected to a device that prepares domestic hot water (26).

10. Installation according to one of Claims 1 to 8, **characterized in that** at least one heat-transfer fluid inlet (6) and outlet (7) are connected to a heating circuit (14).

11. Installation according to one of Claims 1 and 2, **characterized in that** it comprises:
- a circulation loop (29) connecting the heat-transfer fluid upper outlet (7) and lower inlet (6) and equipped with means of circulating the heat-transfer fluid, for example with a pump (30),
- an additional inlet (31) and an additional outlet (32) which are respectively located at the bottom part and at the top part of the reservoir (2) and connected to an emitter (14).

12. Installation according to one of Claims 10 and 11, in conjunction with one of Claims 3 and 4, **characterized in that** it comprises a first pipe (34) connected to the upper end of the external tube (25) of the second coaxial tubes exchanger (23) or to the upper end of the coil (28), and a second pipe (35) connected to the lower end thereof, the first (34) and second (35) pipes being connected to one another at a connection point (36) and respectively comprising a first (37) and a second (38) means of interrupting the flow, for example a nonreturn valve or an isolation valve.

13. Installation according to Claim 12, **characterized in that** the first means of interrupting the flow is a nonreturn valve (37) able to prevent the refrigerant from circulating from the second coaxial tubes exchanger (23) or from the coil (28) towards the connection point (36), the second means of interrupting the flow being a nonreturn valve (38) able to prevent the refrigerant from circulating from the connection point (36) towards the first coaxial tubes exchanger (3).

14. Installation according to one of Claims 12 and 13, **characterized in that** it comprises a third pipe (39) connected to the upper end of the external tube (5) of the first coaxial exchanger (3) and a fourth pipe (40) connected to the lower end thereof, the third (39) and fourth (40) pipes being connected to one another at a connection point (41) and respectively comprising a third (42) and a fourth (43) means of interrupting the flow, for example an isolation valve.

## Patentansprüche

1. Anlage, die eine Wärmetauschervorrichtung (1), einen ersten Kreislauf, in dem ein Strahler (14, 26) speisender Wärmeträger strömt, und einen einen Verdichter und ein Entspannungsorgan aufweisenden zweiten Kreislauf aufweist, in dem ein Kältemittel strömt, das Zustandsänderungen erfährt, wobei die Vorrichtung einen Koaxialrohr-Wärmetauscher (3) aufweist, der ein inneres Rohr (4) und ein äußeres Rohr (5) enthält, wobei der Wärmeträger im inneren Rohr (4) strömt, während das Kältemittel im äußeren Rohr (5) strömt,
**dadurch gekennzeichnet, dass** die Vorrichtung einen Behälter (2) aufweist, der den Wärmeträger empfängt und mit einem Wärmeträgereingang (6), der im unteren Bereich des Behälters (2) angeordnet ist, und mit einem Wärmeträgerausgang (7) ausgestattet ist, der im oberen Bereich angeordnet ist,
wobei der Koaxialrohr-Wärmetauscher (3) innerhalb des Behälters (2) angeordnet und in den Wärmeträger getaucht ist, wobei das innere Rohr (4) an einem ersten Ende mit dem Wärmeträgereingang (6) verbunden ist und an einem zweiten Ende in den Behälter (2) mündet.

2. Anlage nach Anspruch 1, **dadurch gekennzeichnet, dass** das innere Rohr (4) in Höhe einer mittleren Zone des Behälters (2) mündet.

3. Anlage nach einem der Ansprüche 1 und 2, **dadurch gekennzeichnet, dass** die Vorrichtung aufweist:
- einen ersten (6) und einen zweiten Wärmeträgereingang (21), die im unteren Bereich bzw. im mittleren Bereich des Behälters (2) angeordnet sind, einen ersten (7) und einen zweiten Wärmeträgerausgang (22), die im mittleren Bereich bzw. im oberen Bereich des Behälters (2) angeordnet sind,
- einen ersten (3) und einen zweiten Koaxialrohr-Wärmetauscher (23), die im Inneren des Behälters (2) angeordnet und dazu bestimmt sind, in den Wärmeträger eingetaucht zu werden, die je ein inneres Rohr (4, 24) und ein äußeres Rohr (5, 25) aufweisen,
- wobei das innere Rohr (4) des ersten Koaxialrohr-Wärmetauschers (3) an einem Ende mit dem ersten Wärmeträgereingang (6) verbunden ist und am anderen Ende in die mittlere Zone des Behälters (2) mündet,
- wobei das innere Rohr (24) des zweiten Koaxialrohr-Wärmetauschers (23) an einem Ende mit dem zweiten Wärmeträgereingang (21) verbunden ist und am anderen Ende in die obere Zone des Behälters (2) mündet,
- wobei das äußere Rohr (5) des ersten Wärmetauschers (3) in Höhe seines oberen Endes mit dem unteren Ende des äußeren Rohrs (25) des zweiten Wärmetauschers (23) verbunden ist, um ein einziges Strömungsrohr zu definieren, das für den Durchgang des Kältemittels bestimmt ist.

4. Anlage nach einem der Ansprüche 1 und 2, **dadurch gekennzeichnet, dass** die Vorrichtung aufweist:
- einen ersten (6) und einen zweiten Fluideingang (21), die im unteren bzw. im mittleren Bereich des Behälters (2) angeordnet sind, einen ersten (7) und einen zweiten Fluidausgang (22), die im mittleren bzw. im oberen Bereich des Behälters (2) angeordnet sind,
- wobei das innere Rohr (4) des Koaxialrohr-Wärmetauschers (3) an einem Ende mit dem ersten Wärmeträgereingang (6) verbunden ist und am anderen Ende in die mittlere Zone des Behälters (2) mündet,
- eine Rohrschlange (28), die ein mit dem äußeren Rohr (5) des Koaxialrohr-Wärmetauschers (3) verbundenes Ende aufweist, um ein einziges Strömungsrohr zu definieren, das dazu bestimmt ist, mit einem Kältemittelkreislauf verbunden zu werden.

5. Anlage nach einem der Ansprüche 1 bis 4, **dadurch gekennzeichnet, dass** das mündende Ende jedes inneren Rohrs (4, 24) mit einem Strahlregler (8) ausgestattet ist.

6. Anlage nach einem der Ansprüche 1 bis 5, **dadurch gekennzeichnet, dass** der Behälter (2) mindestens einen elektrischen Widerstand (11) aufweist, der eine Zusatzheizung bildet.

7. Anlage nach Anspruch 6, **dadurch gekennzeichnet, dass** der Widerstand (11) oberhalb des Koaxialrohr-Wärmetauschers (3) positioniert ist, der im unteren Bereich des Behälters (2) angeschlossen ist.

8. Anlage nach einem der Ansprüche 1 bis 6, **dadurch gekennzeichnet, dass** sie mindestens eine Dehnungsblase (33) aufweist, die innerhalb des Behälters (2) angeordnet ist.

9. Anlage nach einem der Ansprüche 3 bis 8, **dadurch gekennzeichnet, dass** der zweite Fluideingang (21) und der zweite Fluidausgang (22) mit einem Warmwasserbereiter (26) verbunden sind.

10. Anlage nach einem der Ansprüche 1 bis 8, **dadurch gekennzeichnet, dass** mindestens ein Wärmeträgereingang (6) und mindestens ein Wärmeträgerausgang (7) mit einem Wärmenetz (14) verbunden sind.

11. Anlage nach einem der Ansprüche 1 und 2, **dadurch gekennzeichnet, dass** sie aufweist:
- eine Umwälzschleife (29), die den oberen Wärmeträgerausgang (7) und den unteren Wärmeträgereingang (6) verbindet, die mit Einrichtungen zum Umwälzen des Wärmeträgers ausgestattet ist, zum Beispiel einer Pumpe (30),
- einen zusätzlichen Eingang (31) und zusätzlichen Ausgang (32) die im unteren bzw. oberen Bereich des Behälters (2) angeordnet und mit einem Strahler (14) verbunden sind.

12. Anlage nach einem der Ansprüche 10 und 11 in Kombination mit einem der Ansprüche 3 und 4, **dadurch gekennzeichnet, dass** sie eine erste Leitung (34), die mit dem oberen Ende des äußeren Rohrs (25) des zweiten Koaxialrohr-Wärmetauschers (23) oder mit dem oberen Ende der Rohrschlange (28) verbunden ist, und eine zweite Leitung (35) aufweist, die mit deren unterem Ende verbunden ist, wobei die erste (34) und die zweite Leitung (35) an einem Verbindungspunkt (36) miteinander verbunden sind und je eine erste (37) und eine zweite Einrichtung (38) zur Strömungsunterbrechung aufweisen, zum Beispiel ein Rückschlagventil oder ein Absperrventil.

13. Anlage nach Anspruch 12, **dadurch gekennzeichnet, dass** die erste Einrichtung zur Strömungsunterbrechung ein Rückschlagventil (37) ist, das das Fließen des Kältemittels vom zweiten Koaxialrohr-Wärmetauscher (23) oder von der Rohrschlange (28) zum Verbindungspunkt (36) verhindern kann, während die zweite Einrichtung zur Strömungsunterbrechung ein Rückschlagventil (38) ist, das das Fließen des Kältemittels vom Verbindungspunkt (36) zum ersten Koaxialrohr-Wärmetauscher (3) verhindern kann.

14. Anlage nach einem der Ansprüche 12 und 13, **dadurch gekennzeichnet, dass** sie eine dritte Leitung (39), die mit dem oberen Ende des äußeren Rohrs (5) des ersten Koaxial-Wärmetauschers (3) verbunden ist, und eine vierte Leitung (40) aufweist, die mit dessen unterem Ende verbunden ist, wobei die dritte (39) und die vierte Leitung (40) an einem Verbindungspunkt (41) miteinander verbunden sind und eine dritte (42) bzw. eine vierte Einrichtung (43) zur Strömungsunterbrechung aufweisen, zum Beispiel ein Absperrventil.
